# EUROPEAN PATENT APPLICATION

(11) **EP 4 717 979 A2**
(43) Date of publication of application: **01.04.2026**
(21) Application number: 25195901.1
(22) Date of filing: 14.08.2025
(51) Int. Cl.: F23R 3/28

(54) **FUEL INJECTOR FOR A TURBINE ENGINE**

(30) Priority: 30.09.2024 US 202418901191
(71) Applicant: General Electric Company, Cincinnati, Ohio 45215 (US)
(72) Inventor: SINGH, Saket, 560066 Bengaluru (IN); NAIK, Pradeep, 560066 Bengaluru (IN); BIRMAHER, Shai, Evendale, 45241 (US); BENJAMIN, Michael, Evendale, 45241 (US); COOPER, Clayton, Evendale, 45241 (US); NATH, Hiranya, 560066 Bengaluru (IN); RANGREJ, Rimple, 560066 Bengaluru (IN); PAL, Sibtosh, Evendale, 45241 (US)
(74) Representative: Openshaw & Co.

(57) **Abstract**

A fuel injector (100) for a gas turbine engine (10) includes a compression section (12), combustion section (14), and turbine section (16) in serial flow arrangement. The fuel injector (100) arranges in the combustion section (14) and includes an inner nozzle (104) defining a fuel injector axis (114) and an outer nozzle (106) in annular arrangement about the inner nozzle (104). The outer nozzle (106) at least partially defines a mixing region (156). An inner air passage (150) and an outer air passage (152) exhaust to the mixing region (156). A fuel body (180) positions between the inner air passage (150) and the outer air passage (152) and has an outer fuel passage (154) exhausting to the mixing region (156).

## Description

### TECHNICAL FIELD

The present subject matter relates generally to a fuel injector for supplying a mixture of fuel and air to a turbine engine, and more specifically, for supplying the mixture of fuel and air to a combustor for combustion to drive the turbine engine.

### BACKGROUND

A gas turbine engine typically includes a fan and a turbomachine. The turbomachine generally includes an inlet, one or more compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as for producing useful work to propel an aircraft in flight or to power a load, such as an electrical generator.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic representation of a turbine engine, the turbine engine including a compression section, a combustion section, and a turbine section, in accordance with an aspect of the present disclosure.
FIG. 2 depicts a cross-sectional view of the combustion section taken along line II-II of FIG. 1, further illustrating a set of fuel nozzle assemblies, in accordance with an aspect of the present disclosure.
FIG. 3 is a schematic of a side cross-sectional view taken along line III-III of FIG. 2, further illustrating one fuel nozzle assembly of the set of fuel nozzle assemblies exhausting into a combustion chamber, in accordance with an aspect of the present disclosure.
FIG. 4 is a cross-sectional view of a portion of a fuel injector for use with the fuel nozzle assemblies of FIG. 2, in accordance with an aspect of the present disclosure.
FIG. 5 is a cross-sectional view of a fuel injector for use with a fuel nozzle assembly, in accordance with an aspect of the present disclosure.
FIGS. 6A-6D show exemplary cross-sectional arrangements for outer fuel passages within fuel bodies for use within a fuel injector assembly, in accordance with an aspect of the present disclosure.
FIGS. 7A-7C show exemplary cross-sectional arrangements for outer fuel passages within fuel bodies having a bullet shape, in accordance with an aspect of the present disclosure.
FIG. 8 is a partial view of a fuel injector looking in a forward direction with a fuel body having a set of fuel passages and an air assist circuit arranged as a set of air assist passages between fuel passages of the set of fuel passages, in accordance with an aspect of the present disclosure.
FIG. 9 is a partial view of a fuel injector looking in a forward direction with a fuel body having a set of fuel passages and an air assist circuit arranged as an inner air assist passage, and outer air assist passage, and radial air assist passages arranged about the set of fuel passages, in accordance with an aspect of the present disclosure.
FIG. 10 is a partial view of a fuel injector looking in a forward direction with a fuel body having a set of fuel passages and an air assist circuit as a set of air assist passages having elliptical and circular arrangements, in accordance with an aspect of the present disclosure.

### DETAILED DESCRIPTION

Aspects of the disclosure herein are directed to a fuel injector located within an engine, and more specifically, to a fuel injector for supplying a fuel or a fuel and air mixture to a combustor for combustion within a turbine engine. For purposes of illustration, the present disclosure will be described with respect to a fuel injector located within the combustor for a turbine engine. It will be understood, however, that aspects of the disclosure herein are not so limited and may have general applicability within an engine that combusts a fuel to drive the engine, as well as in non-aircraft applications or other turbine environments, such as other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first," "second," "third," "fourth," and "fifth" may be used interchangeably to distinguish one component from another and are not intended to signify location or importance of the individual components.

The terms "forward" and "aft" refer to relative positions within a turbine engine or component thereof and refer to the normal operational attitude of the turbine engine. For example, with regard to a gas turbine engine, forward refers to a position closer to an engine inlet and aft refers to a position closer to an engine nozzle or exhaust or can be relative to a local flow direction through the turbine engine. As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid, or multi-phase. The term "fluidly coupled" means that a fluid is capable of making the connection or passing among the areas specified.

Additionally, as used herein, the terms "radial" or "radially" refer to a direction away from a common center. For example, in the overall context of a turbine engine, radial refers to a direction along a ray extending between a center longitudinal axis of the engine, an engine rotational axis, and an outer engine circumference.

In certain exemplary embodiments of the present disclosure, a turbine engine defining a centerline and a circumferential direction is provided. The turbine engine may generally include a turbomachine and a rotor assembly. The rotor assembly may be driven by the turbomachine. The turbomachine, the rotor assembly, or both may define an annular flow path relative to the centerline of the turbine engine.

All directional references (e.g., radial, axial, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order, and relative sizes reflected in the drawings attached hereto can vary.

The singular forms "a," "an," and "the" include plural references unless the context clearly dictates otherwise. Furthermore, as used herein, the term "set" or a "set" of elements can be any number of elements, including only one.

Reference will now be made in detail to the architecture, and in particular the fuel injector, located within a combustion section of a turbine engine, one or more examples of which are illustrated in the accompanying drawings. The detailed description uses numerical and letter designations to refer to features in the drawings.

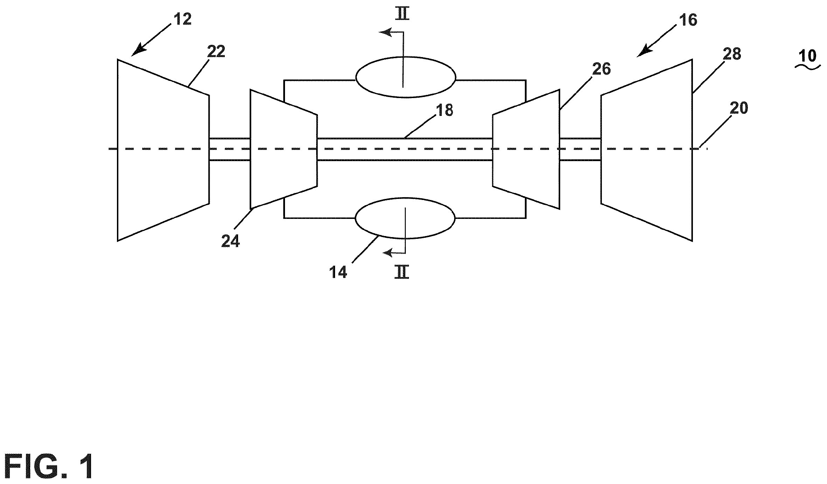

FIG. 1 is a schematic view of a turbine engine 10. As a non-limiting example, the turbine engine 10 can be used within an aircraft. The turbine engine 10 includes, at least, a compression section 12, a combustion section 14, and a turbine section 16 in serial flow arrangement. A drive shaft 18 rotationally couples the compression section 12 and the turbine section 16, such that rotation of one affects the rotation of the other and defines a rotational axis or engine centerline 20 for the turbine engine 10.

The compression section 12 can include a low-pressure (LP) compressor 22, and a high-pressure (HP) compressor 24 serially fluidly coupled to one another. The turbine section 16 can include an LP turbine 28, and an HP turbine 26 serially fluidly coupled to one another. The drive shaft 18 operatively couples the LP compressor 22, the HP compressor 24, the LP turbine 28 and the HP turbine 26 together. Additionally, it is contemplated that the drive shaft 18 can include an LP drive shaft (not shown) and an HP drive shaft (not shown). The LP drive shaft couples the LP compressor 22 to the LP turbine 28, and the HP drive shaft couples the HP compressor 24 to the HP turbine 26. An LP spool is defined as the combination of the LP compressor 22, the LP turbine 28, and the LP drive shaft such that the rotation of the LP turbine 28 applies a driving force to the LP drive shaft, which in turn rotates the LP compressor 22. An HP spool is defined as the combination of the HP compressor 24, the HP turbine 26, and the HP drive shaft such that the rotation of the HP turbine 26 applies a driving force to the HP drive shaft which in turn rotates the HP compressor 24.

The compression section 12 includes a plurality of axially spaced stages. Each stage includes a set of circumferentially spaced rotating blades and a set of circumferentially spaced stationary vanes. The compressor blades for a stage of the compression section 12 can be mounted to a disk, which is mounted to the drive shaft 18. Each set of blades for a given stage can have its own disk. The vanes of the compression section 12 can be mounted to a casing which can extend circumferentially about the turbine engine 10. It will be appreciated that the representation of the compression section 12 is merely schematic and that there can be any number of stages. Further, it is contemplated that there can be any other number of components within the compression section 12.

Similar to the compression section 12, the turbine section 16 includes a plurality of axially spaced stages, with each stage having a set of circumferentially spaced, rotating blades and a set of circumferentially spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes, and turbine stages as the illustrated turbine section is merely a schematic representation. Further, it is contemplated that there can be any other number of components within the turbine section 16.

The combustion section 14 is provided serially between the compression section 12 and the turbine section 16. The combustion section 14 is fluidly coupled to at least a portion of the compression section 12 and the turbine section 16 such that the combustion section 14 at least partially fluidly couples the compression section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the turbine engine 10, ambient or atmospheric air is drawn into the compression section 12 via a fan (not illustrated) upstream of the compression section 12, where the air is compressed defining a compressed air. The compressed air then flows into the combustion section 14 where the compressed air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The compressed air flow and the combustion gases can together define a working air flow that flows through the fan, compression section 12, combustion section 14, and turbine section 16 of the turbine engine 10.

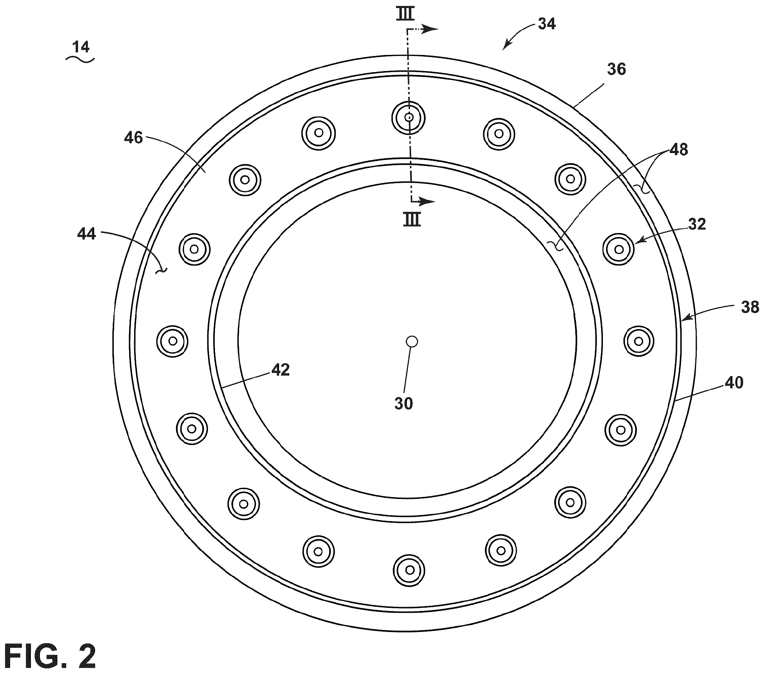

FIG. 2 depicts a cross-sectional view of the combustion section 14 along line II-II of FIG. 1. For purposes of illustration, the drive shaft 18 (FIG. 1) has been removed. The combustion section 14 includes a combustor 34. The combustor 34 includes a dome wall 44 including a set of fuel nozzle assemblies 32 in annular arrangement about a combustor centerline 30. The combustor centerline 30 can be the engine centerline 20 (FIG. 1) of the turbine engine 10 (FIG. 1). Additionally, or alternatively, the combustor centerline 30 can be a centerline for the combustion section 14, a single combustor, or a set of combustors that are arranged about the combustor centerline 30.

The set of fuel nozzle assemblies 32 can include rich cups, lean cups, or a combination of both rich and lean cups. It should be appreciated that the annular arrangement of the set of fuel nozzle assemblies 32 can include any number of fuel nozzle assemblies, including one or multiple fuel nozzle assemblies, and one or more of the fuel nozzle assemblies can have similar or different characteristics. The combustor 34 is defined, at least in part, by a combustor liner 38. The combustor 34 can have a can, can-annular, or annular arrangement depending on the type of engine in which the combustor 34 is located. In a non-limiting example, the combustor 34 can have a combination arrangement as further described herein located within a casing 36 of the engine. The combustor liner 38, as illustrated by way of example, can be annular. The combustor liner 38 can include an outer combustor liner 40 and an inner combustor liner 42 concentric with respect to each other and annular about the engine centerline. The dome wall 44 together with the combustor liner 38 can define a combustion chamber 46 having an annular configuration disposed about the combustor centerline 30. The set of fuel nozzle assemblies 32 can be fluidly coupled to the combustion chamber 46. A compressed air passageway 48 can be defined at least in part by both the combustor liner 38 and the casing 36.

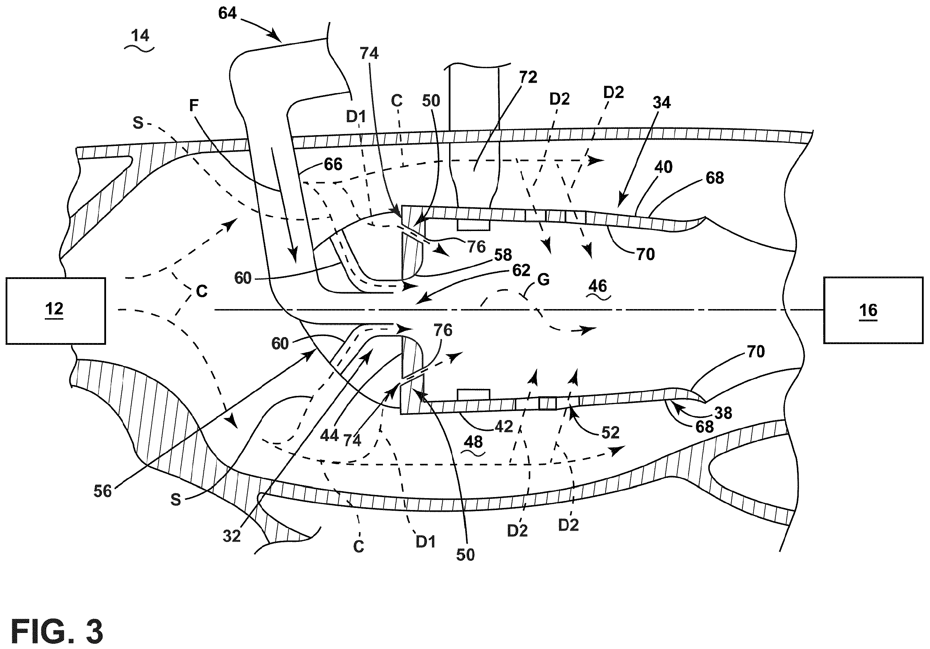

FIG. 3 depicts a cross-sectional view taken along line III-III of FIG. 2 illustrating the combustion section 14 between the compression section 12 and the turbine section 16. At least one flame shaping passage can fluidly connect compressed air and the combustion chamber 46. By way of example, the at least one flame shaping passage is illustrated as a first set of flame shaping holes 50 or a second set of flame shaping holes 52. The combustor 34 can include the first set of flame shaping holes 50, the second set of flame shaping holes 52, or both the first set of flame shaping holes 50 and the second set of flame shaping holes 52.

The first set of flame shaping holes 50 pass through the dome wall 44, fluidly coupling compressed air (C) from the compression section 12 or the compressed air passageway 48 to the combustion chamber 46. The second set of flame shaping holes 52 pass through the combustor liner 38, fluidly coupling compressed air from the compressed air passageway 48 to the combustion chamber 46.

Each fuel nozzle assembly of the set of fuel nozzle assemblies 32 can be coupled to and disposed within a dome assembly 56. Each fuel nozzle assembly of the set of fuel nozzle assemblies 32 can include a flare cone 58 and a swirler 60. The flare cone 58 includes an outlet 62 directly fluidly coupled to the combustion chamber 46. Each fuel nozzle assembly of the set of fuel nozzle assemblies 32 is fluidly coupled to a fuel inlet 64 via a passageway 66.

Both the inner combustor liner 42 and the outer combustor liner 40 have an outer liner surface 68 and an inner liner surface 70 at least partially defining the combustion chamber 46. The combustor liner 38 can be made of one continuous monolithic portion or multiple monolithic portions assembled together to define the inner combustor liner 42 and the outer combustor liner 40. By way of non-limiting example, the outer liner surface 68 can define a first piece of the combustor liner 38 while the inner liner surface 70 can define a second piece of the combustor liner 38 that when assembled together form the combustor liner 38. As described herein, the combustor liner 38 includes the second set of flame shaping holes 52. It is further contemplated that the combustor liner 38 can be any type of combustor liner 38, including but not limited to a single wall or a double walled liner or a tile liner. An ignitor 72 can be provided at the combustor liner 38 and fluidly coupled to the combustion chamber 46, at various locations, by way of non-limiting example upstream of the second set of flame shaping holes 52.

During operation, compressed air (C) from a compressed air supply, such as the LP compressor 22 or the HP compressor 24 of FIG. 1, can flow from the compression section 12 to the combustor 34. A portion of the compressed air (C) can flow through the dome assembly 56. A first part of the compressed air (C) flowing through the dome assembly 56 can be fed to each fuel nozzle assembly of the set of fuel nozzle assemblies 32 via the swirler 60 as a swirled airflow (S). A flow of fuel (F) is fed to each fuel nozzle assembly of the set of fuel nozzle assemblies 32 via the fuel inlet 64 and the passageway 66. The swirled airflow (S) and the flow of fuel (F) are mixed at the flare cone 58 and fed to the combustion chamber 46 as a fuel/air mixture. The ignitor 72 can ignite the fuel/air mixture to define a flame within the combustion chamber 46, which generates a combustion gas (G). While shown as starting axially downstream of the outlet 62, it will be appreciated that the fuel/air mixture can be ignited at or near the outlet 62.

A second part of the compressed air (C) flowing through one or more portions of the dome assembly 56 can be fed to the first set of flame shaping holes 50 as a first flame shaping airflow (D1). That is, a portion of the compressed air (C) from the compression section 12 can flow through the dome wall 44 and into the combustion chamber 46 by passing through the first set of flame shaping holes 50. An inlet 74 is defined by a portion of one or more flame shaping holes of the first set of flame shaping holes 50. The inlet 74 is fluidly coupled to the compressed air (C). The first flame shaping airflow (D1) enters the one or more flame shaping holes of the first set of flame shaping holes 50 at the inlet 74 and exits the one or more flame shaping holes of the first set of flame shaping holes 50 at an outlet 76 located at an aft surface of the dome wall 44.

Another portion of the compressed air (C) can flow through the compressed air passageway 48 and can be fed to the second set of flame shaping holes 52 as a second flame shaping airflow (D2). In other words, another portion of the compressed air (C) can flow axially past the dome assembly 56 and enter the combustion chamber 46 by passing through the second set of flame shaping holes 52. That is, compressed air (C) can flow through the combustor liner 38 and into the combustion chamber 46 by passing through the second set of flame shaping holes 52.

The first flame shaping airflow (D1) can be used to direct and shape the flame. The second flame shaping airflow (D2) can be used to direct the combustion gas (G). In other words, the first set of flame shaping holes 50 or the second set of flame shaping holes 52 extending through the dome wall 44 or the combustor liner 38 direct compressed air (C) into the combustion chamber 46, where the directed compressed air (C) is used to control, shape, cool, or otherwise contribute to the combustion process in the combustion chamber 46.

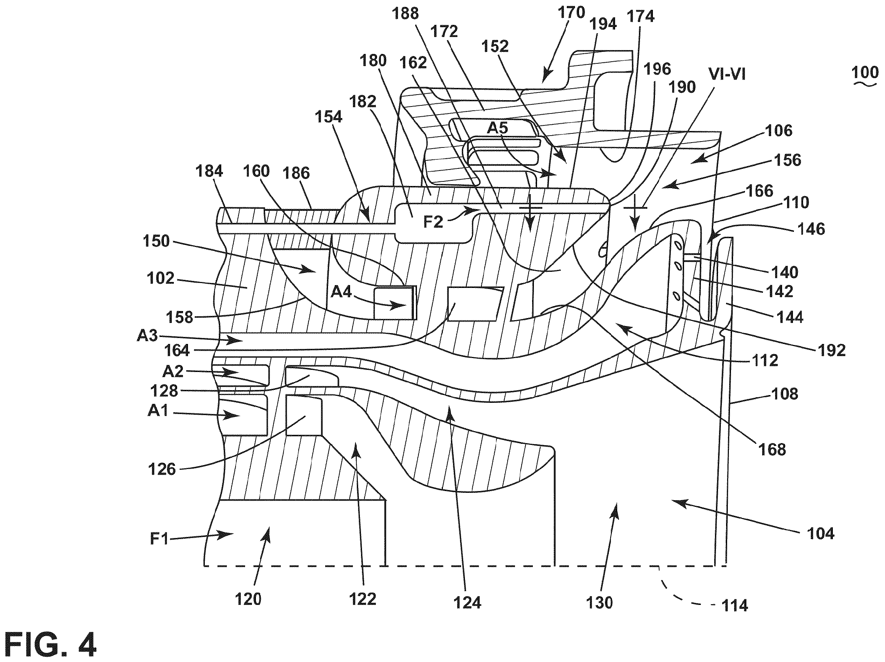

FIG. 4 illustrates a cross-sectional view of a fuel injector 100 suitable for use within the fuel nozzle assemblies 32 of FIG. 2. The fuel injector 100 includes a body 102 with an inner nozzle 104 and an outer nozzle 106 in annular arrangement about the inner nozzle 104. The inner nozzle 104 exhausts to the combustion chamber 46 (FIG. 3) at an inner nozzle outlet 108, and the outer nozzle 106 exhausts at an outer nozzle outlet 110. The inner nozzle 104 and the outer nozzle 106 can provide a fuel and air mixture to the combustion chamber 46 (FIG. 3) for combustion. An intermediate passage 112 can be positioned in an annular arrangement between the inner nozzle 104 and the outer nozzle 106, while it is contemplated that the intermediate passage 112 is formed as part of the inner nozzle 104. A fuel injector axis 114 can be defined by the annular shape of the fuel injector 100.

The inner nozzle 104 includes a central fuel passage 120 arranged along the fuel injector axis 114. The central fuel passage 120 can provide a first supply of fuel (F1) to the inner nozzle 104. A first air passage 122 is provided in an annular arrangement about the central fuel passage 120, and a second air passage 124 is provided in an annular arrangement about the first air passage 122. A first set of vanes 126 are positioned within the first air passage 122 to impart a swirl to a first supply of air (A1) provided from the first air passage 122. A second set of vanes 128 are positioned within the second air passage 124 to impart a swirl to a second supply of air (A2) provided from the second air passage 124. The central fuel passage 120, the first air passage 122, and the second air passage 124 exhaust to an inner mixing region 130 within the inner nozzle 104 prior to exhausting at the inner nozzle outlet 108.

The intermediate passage 112 can be supplied with a third supply of air (A3). In a non-limiting example, it is contemplated that the third supply of air (A3) can be provided from a common source or region of the fuel injector 100 that supplies the first and second supplies of air (A1), (A2) to the inner nozzle 104, while a separate supply of the air is contemplated. The intermediate passage 112 exhausts through a set of apertures 140 at an intermediate passage aft end 142. An extension 144 extends from the body 102 at the set of apertures 140 and defines a cavity 146 between the extension 144 and the intermediate passage aft end 142. The set of apertures 140 exhaust to the cavity 146 from the intermediate passage 112 such that fluid exhausted from the set of apertures 140 can impinge upon the extension 144.

The outer nozzle 106 includes an inner air passage 150 having an annular arrangement and an outer air passage 152 in an annular arrangement about the inner air passage 150. A fuel body 180 is positioned between (e.g., radially, relative to the fuel injector axis 114) and partially defines the inner air passage 150 and the outer air passage 152. The fuel body 180 includes an inner surface 192 confronting and partially defining the inner air passage 150. The fuel body 180 includes an outer surface 194 confronting a swirler 170 and partially defining the outer air passage 152. The fuel body 180 terminates at an aft end 196

An outer fuel passage 154 is positioned within the fuel body 180. The inner air passage 150, the outer air passage 152, and the outer fuel passage 154 exhaust to an outer mixing region 156 within the outer nozzle 106. The inner air passage 150 can supply a fourth supply of air (A4) to the outer mixing region 156, and the outer air passage 152 can supply a fifth supply of air (A5) to the outer mixing region 156. The outer fuel passage 154 provides a second supply of fuel (F2) to the outer mixing region 156. The fourth and fifth supplies of air (A4), (A5) intermix with the second supply of fuel (F2) within the outer mixing region 156 and exhaust to the combustion chamber 46 (FIG. 3) at the outer nozzle outlet 110.

The inner air passage 150 is at least partially defined by an exterior surface 168 of the body 102, and includes a converging portion 158, a constant cross-sectional area portion 160, and a diverging portion 162 in a serial arrangement, with the diverging portion 162 exhausting to the outer mixing region 156. An inner air swirler 164 can extend across the inner air passage 150 to provide support for the fuel body 180 across the inner air passage 150 and to swirl the fourth supply of air (A4). In a non-limiting example, the inner air swirler 154 can be provided as a rib extending across the inner air passage 150. Alternately, the inner air swirler 164 can be a non-swirling rib or have a minimal swirl to minimize scrubbing against the body 102 along the inner air passage 150 and increase durability. The diverging portion 162 is defined by a ramp 166 formed in the body 102 extending toward the outer mixing region 156.

The outer air passage 152 can be at least partially defined by the swirler 170 in an annular arrangement about the fuel injector 100. The swirler 170 can include a set of swirler vanes 172 for imparting a swirl or tangential component to the fifth supply of air (A5). While the swirler 170 is shown as a radial swirler, it is contemplated that the swirler 170 can be arranged as a radial swirler, an axial swirler, or a hybrid of both axial and radial. An interior surface 174 of the swirler 170 confronts and partially defines the outer air passage 152 and the outer mixing region 156. The swirler 170 can be a radial swirler, while an axial swirler is contemplated in a non-limiting example, where a radial swirler imparts a swirl to a flow of air moving in a radial direction or substantially radial direction and where an axial swirler imparts a swirl to a flow of air moving in an axial direction or substantially axial direction. The outer air passage 152 can be defined between the swirler 170 and the fuel body 180 and receives the fifth supply of air (A5) as a swirled supply of air from the swirler 170.

The outer fuel passage 154 can include a fuel plenum 182 fed by an upstream fuel passage 184 extending through a rib 186 extending between the fuel body 180 and the remainder of the body 102 across the inner air passage 150. The fuel plenum 182 can be annular, while the upstream fuel passage 184 (or any portion of the outer fuel passage 154) can be arranged as a set of passages in an annular arrangement about the body 102 in a non-limiting example. A downstream fuel passage 188 fluidly couples the fuel plenum 182 to the outer mixing region 156 at a fuel outlet 190. In a non-limiting example, the downstream fuel passage 188 can be arranged as a set of passages in an annular arrangement about the fuel body 180. While the outer fuel passage 154 is illustrated as having the fuel plenum 182, the upstream fuel passage 184 can fluidly couple to the downstream fuel passage 188 without an intermediate plenum, and various alternate configurations are contemplated emitting the second supply of fuel (F2) to the outer mixing region 156 through the fuel outlet 190, including any combinations of passages and plenums. In a non-limiting example, the outer fuel passage 154 can be arranged as a set of downstream fuel passages 188 having a set of fuel outlets 190 exhausting to the outer mixing region 156.

In operation, the first supply of fuel (F1), the first supply of air (A1), and the second supply of air (A2) can be provided to the inner mixing region 130, where the first supply of air (A1) and the second supply of air (A2) can intermix as a fuel- and-air mixture for provision to the combustion chamber 46 (FIG. 3) at the inner nozzle outlet 108. The third supply of air (A3) is provided to the intermediate passage 112, where the third supply of air (A3) exhausts through the set of apertures 140 and passes to the cavity 146. The third supply of air (A3) can impinge upon the extension 144 as it exhausts to the cavity 146, where it is ultimately exhausted from the cavity 146 to the combustion chamber 46 (FIG. 3) through the outer nozzle outlet 110.

The fourth supply of air (A4) is provided along the inner air passage 150. The converging portion 158 can accelerate the fourth supply of air (A4) toward the constant cross-sectional area portion 160. The inner air swirler 164 imparts a swirl or tangential component to the fourth supply of air (A4). The diverging portion 162 having the ramp 166 provides a higher radial velocity component to the fourth supply of air (A4), such that the fourth supply of air (A4) moves in a radially outward direction relative to the fuel injector axis 114. The fifth supply of air (A5) is provided from the swirler 170 to the outer air passage 152. The set of swirler vanes 172 can impart a swirl to the fifth supply of air (A5) and can turn the flow direction from radial or generally radial to or toward axial. The swirl directions between the fourth and fifth air supplies (A4), (A5) can be in the same direction, while counter-rotating flows are contemplated. The second supply of fuel (F2) is provided from the outer fuel passage 154 to the outer mixing region 156 where it can intermix with the fourth and fifth supplies of air (A4), (A5). The mixture thereof is then exhausted to the combustion chamber 46 (FIG. 3) through the outer nozzle outlet 110.

Benefits for the fuel injector 100 include that the swirled flows for the fourth and fifth supplies of air (A4), (A5) improve atomization of the second supply of fuel (F2) within the outer nozzle 106. Sandwiching the second supply of fuel (F2) between the swirling fourth and fifth supplies of air (A4), (A5) improves or increases atomization of the second supply of fuel (F2), and therefore, improves or increases intermixing among the second supply of fuel (F2) and the fourth and fifth supplies of air (A4), (A5). The improved atomization and intermixing reduces or mitigates the opportunity for flame holding, flashback, and autoignition at the fuel injector 100. Such a reduction or mitigation in flame holding, flashback, and autoignition reduces stress and fatigue on the fuel injector 100, which increases component lifetime and reduces maintenance. Additionally, improved intermixing of fuel and air can improve engine efficiency through improved combustion efficiency, which can reduce emissions generated by the turbine engine 10, while appreciating the benefits of mitigating flame holding, flashback, and autoignition.

The ramped geometry for the inner air passage 150 at the ramp 166 imparts a radially outward vector to the fourth supply of air (A4). A radially outward vector assists in keeping the mixture emitted from the outer nozzle 106 radially outboard of the mixture emitted from the inner nozzle 104. Keeping the mixture radially outboard at the outer nozzle outlet 110 reduces, mitigates, or eliminates the opportunity for flame holding between the inner and outer nozzles 104, 106.

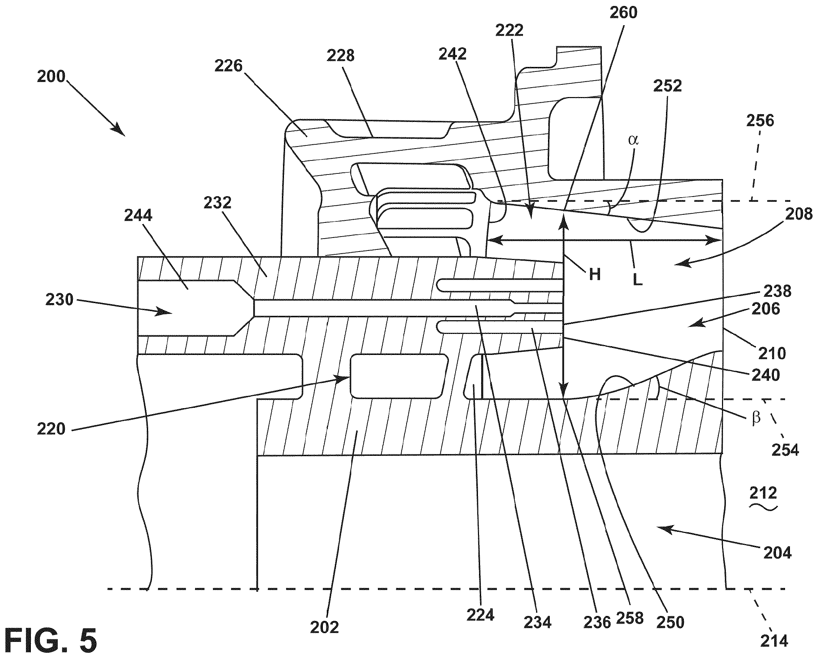

Referring to FIG. 5, a fuel injector 200 usable with the fuel nozzle assemblies 32 of FIG. 2 includes a body 202 with an inner nozzle 204 and an outer nozzle 206 having an outer mixing region 208. The outer nozzle 206 exhausts at an outer nozzle outlet 210 to a combustion chamber 212, such as the combustion chamber 46 of FIG. 3. A fuel injector axis 214 can be defined by the annular shape of the fuel injector 200.

The outer nozzle 206 includes an inner air passage 220 and an outer air passage 222. An inner air swirler 224 can be provided in the inner air passage 220 to impart a swirl to a supply of air provided to the inner air passage 220. A swirler 226 can be provided in annular arrangement about the body 202 and can partially define the outer air passage 222. The swirler 226 includes a set of swirler vanes 228 in annular arrangement about the swirler 226 to impart a swirl to a supply of air (A) provided from the swirler 226 to the outer air passage 222.

An outer fuel passage 230 extends through a fuel body 232 positioned between the inner air passage 220 and the outer air passage 222. The outer fuel passage 230 includes a fuel plenum 244 fluidly coupled to a downstream fuel passage 234 downstream of the fuel plenum 244 relative to a flow direction for a second supply of fuel along the outer fuel passage 230. The downstream fuel passage 234 fluidly couples to a set of multiple fuel outlet passages 236 exhausting from the fuel body 232 at a set of multiple fuel outlets 238 at an aft end 240 of the fuel body 232. The set of multiple fuel outlet passages 236 can be arranged parallel to the fuel injector axis 214 in a non-limiting example. The outer nozzle 206 can be at least partially defined between a first surface 250 defined along the body 202 and a second surface 252 along the swirler 226.

A mixing region height (H) can be defined as the distance between the body 202 and the swirler 226 at the aft end 240 measured perpendicular to the fuel injector axis 214. In a non-limiting example, the positions for the set of multiple fuel outlets 238 can be positioned from 25%-75% (inclusive of endpoints) of the mixing region height (H), where 0% represents a position along the first surface 250 and 100% represents a position along the second surface 252. A passage length (L) can be defined as the axial length between a vane aft end 242 of the set of swirler vanes 228 and the outer nozzle outlet 210, and can be defined in a direction parallel to the fuel injector axis 214. In a non-limiting example, the position of the aft end 240 can be from 10%-80% (inclusive of endpoints) of the passage length (L), where 0% represents a position at the vane aft end 242 and 100% represents a position at the outer nozzle outlet 210. Such positioning and arrangements for the set of multiple fuel outlets 238 and the aft end 240 can, for example, provide enough length to achieve suitable intermixing of the fuel and air to mitigate and reduce flame holding, flashback, and autoignition at the outer nozzle 206.

The first surface 250 and the second surface 252 can be ramped, defining a converging cross-sectional area for the outer nozzle 206 and the outer mixing region 208 in a direction toward the outer nozzle outlet 210. The ramped geometry for the first surface 250 can be defined by a first angle (β), which can be defined as the angle between the first surface 250 and a first axis 254 defined parallel to the fuel injector axis 214. In a non-limiting example, the first angle (β) can be greater than or equal to two degrees (2°) and less than or equal to fifty degrees (50°). The ramped geometry for the second surface 252 can be defined by a second angle (α), which can be defined as the angle between the second surface 252 and a second axis 256 defined parallel to the fuel injector axis 214. In a non-limiting example, the second angle (α) can be greater than or equal to two degrees (2°) and less than or equal to forty-five degrees (45°). In an additional non-limiting example, it is contemplated that the first surface 250, the second surface 252, or both, can be non-ramped, such as defining a zero-degree angle (0°) relative to the first and second axes 254, 256.

In a non-limiting example, the first surface 250 can be curved. Such a curvature can be defined by a varying value for the first angle (β) extending in an axial direction. Where the first surface 250 has such a curvature, the first angle (β) can be measured at the same axial position 258 as the aft end 240, relative to the fuel injector axis 214. Similarly, in another non-limiting example where the second surface 252 is curved the second angle (α) can be measured at the same axial position 260 as the aft end 240, relative to the fuel injector axis 214.

In another non-limiting example, the airflow volume provided from the inner air passage 220 can vary from 10%-70% (inclusive of endpoints), and the airflow volume provided from the outer air passage 222 can vary from 30%-90% (inclusive of endpoints), such that the total airflow volume provided to the outer nozzle 206 from the inner and outer air passages 220, 222 equals 100%. Such arrangements permit suitable intermixing of fuel and air to mitigate autoignition, flame holding, and flashback.

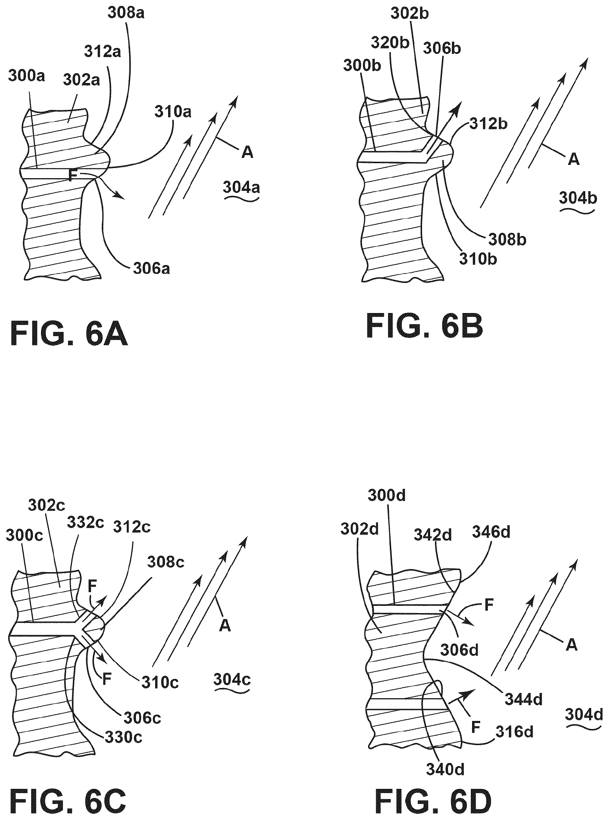

Referring to FIGS. 6A-6D, four exemplary arrangements are shown for outer fuel passages 300a-d, which can be the outer fuel passage 154 of FIG. 4 or one fuel passage of the set of multiple fuel outlet passages 236 of FIG. 5, in non-limiting examples. The outer fuel passages 300a-d are positioned within a fuel body 302a-d. Relative positioning and orientation for the outer fuel passages 300a-d within the fuel bodies 302a-d of a fuel injector may be appreciated at line VI-VI of FIG. 4, provided for reference, and not intended to represent a section of FIG. 4.

Each outer fuel passage 300a-d exhausts to an outer mixing region 304a-d at a fuel outlet 306a-d. The outer fuel passage 300a-d can be similar to the outer fuel passage 154 of FIG. 4, the outer mixing region 304a-d can be similar to the outer mixing regions 156, 208 of FIGS. 4-5, and the fuel outlet 306a-d can be similar to the fuel outlet 190 of FIG. 4, in non-limiting examples. The airflow (A) passes through each outer mixing region 304a-d and can be a swirling airflow provided to each outer mixing region 304a-d from an inner air passage and an outer air passage, such as the inner air passages 150, 220 and the outer air passages 152, 222 of FIGS. 4 and 5, for example.

Referring to FIG. 6A, a protuberance 308a extends aft from the remainder of the fuel body 302a into the outer mixing region 304a and can be one of a set of protuberances in an annular arrangement about the fuel body 302a. The protuberance 308a can be curved or rounded to define an upstream face 310a and a downstream face 312a, relative to the direction of the airflow (A) provided to the outer mixing region 304a. The fuel outlet 306a can be positioned on the upstream face 310a of the protuberance 308a.

In operation, the supply of fuel (F) can be provided from the outer fuel passage 300a at the upstream face 310a of the protuberance 308a into the outer mixing region 304a. Provision of the supply of fuel (F) from the upstream face 310a injects the supply of fuel (F) as a crossflow into the airflow (A). In a non-limiting example, injection of the supply of fuel (F) can be at an angle relative to the airflow (A) that can be greater than zero degrees (0°) and less than or equal to ninety degrees (90°), where ninety degrees (90°) is perpendicular to the airflow (A) and where zero degrees (0°) is aligned with the airflow (A). Injection as a crossflow for the supply of fuel (F) into the airflow (A) can further improve intermixing and atomization of the supply of fuel (F) with the airflow (A) due to increased turbulence generated by the crossflow arrangement.

Referring to FIG. 6B, a protuberance 308b extends aft from the remainder of the fuel body 302b into the outer mixing region 304b and can be one of a set of protuberances in an annular arrangement about the fuel body 302b. The protuberance 308b can have an upstream face 310b and a downstream face 312b, relative to the direction of the airflow (A). The fuel outlet 306b can be positioned on the downstream face 312b of the protuberance 308b. The outer fuel passage 300b includes an outlet portion 320b that extends to the fuel outlet 306b and can be angled relative to the remainder of the outer fuel passage 300b, such as at a non-zero angle or an angle less than ninety degrees (90°). The outlet portion 320b can be arranged perpendicular to the surface of the protuberance 308b at the fuel outlet 306b, while an angled offset from perpendicular is contemplated.

In operation, a supply of fuel (F) can be provided at the downstream face 312b of the protuberance 308b into the outer mixing region 304b. Provision of the supply of fuel (F) from the downstream face 312b injects the supply of fuel (F) as a co-rotating flow into the airflow (A).

Referring to FIG. 6C, the outer fuel passage 300c branches into a first portion 330c and a second portion 332c, which can each be arranged perpendicular to upstream and downstream faces 310c, 312c, respectively. In this way, a supply of fuel (F) can be provided at both the upstream and downstream faces 310c, 312c both co-rotating with the airflow (A) and counter-rotating with the airflow (A). Such a provision of fuel that is both co-rotating and counter-rotating can provide for increased intermixing.

Referring to FIG. 6D, the fuel body 302d can include an aft end 316d with a varying axial extent. More specifically, the aft end 316d can include a first face 340d and a second face 342d. The first and second faces 340d, 342d can be linear, as shown in cross section, while it is contemplated that the first and second faces 340d, 342d can be planar along the aft end 316d of the fuel body 302d. The first face 340d transitions to the second face 342d at a concave bend 344d, and the second face 342d can transition to the next first face 340d at a convex bend 346d in a repeating manner in annular arrangement about a fuel injector. The concave bend 344d can represent the forward-most portion of the aft end 316d, and the convex bend 346d can represent the aft-most portion of the aft end 316d. The outer fuel passages 300d have fuel outlets 306d arranged on the first and second faces 340d, 342d, and can be arranged perpendicular to the first and second faces 340d, 342d, while a non-perpendicular arrangement or an angular offset is contemplated. In additional non-limiting examples, it is contemplated that fuel outlets 306d can be arranged on various surfaces along the aft end 316d, such as the first face 340d, the second face 342d, the concave bend 344d, the convex bend 346d, or spanning any two or more thereof, as well as any shape or geometry along the aft end 316d, including but not limited to linear, curved, or angled cross-sectional shapes, or combinations thereof, or such shapes varying along the aft end 316d in a direction perpendicular to the cross-section (e.g., into and out of the page of FIG. 7D).

FIGS. 6A-6D provide for injecting fuel from a fuel body having a protruding feature, like the protuberances 308a-c, or a variable axial positioning, like the first and second faces 340d, 342d. Such features or positioning provide for injecting the fuel with a tangential component, that may be co-rotating or counter-rotating, which can be utilized to increase intermixing of the fuel and air or increasing residence time within the injector to permit a greater opportunity for the fuel and air to intermix, resulting in an overall improvement in intermixing and atomization among the fuel and air. Such intermixing mitigates autoignition at the fuel injector and permits appreciating reduced emissions.

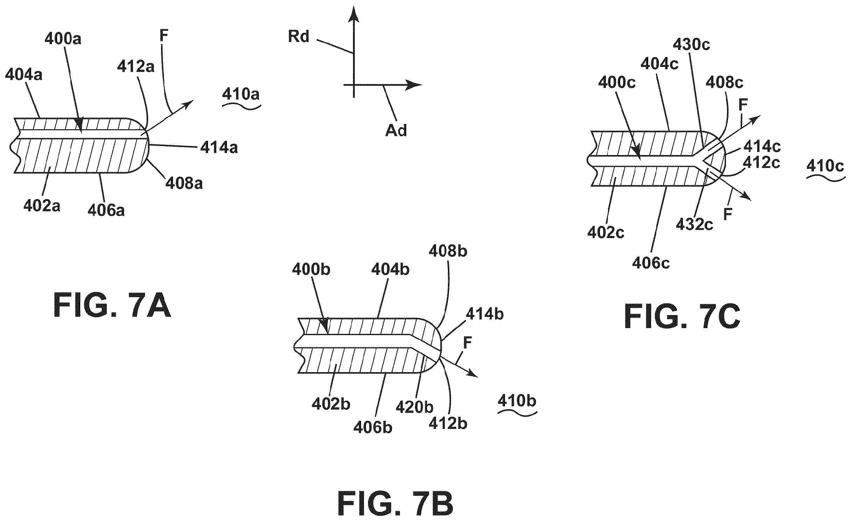

Referring to FIGS. 7A-7C, three exemplary arrangements are shown for outer fuel passages 400a-c, which can be the outer fuel passage 154 of FIG. 4, one of the set of multiple fuel outlet passages 236 of FIG. 5, or one of the outer fuel passages 300a-d of FIGS. 6A-6D, in non-limiting examples. An axial direction (Ad) is shown and has a radial direction (Rd) that extends perpendicular to the axial direction (Ad). The axial direction (Ad) can be parallel to the fuel injector axis carrying the outer fuel passages 400a-c, like the fuel injector axis 114 of FIG. 4 or the fuel injector axis 214 of FIG. 5. The outer fuel passages 400a-c are arranged within fuel bodies 402a-c having a bullet shape, each having a radially outer surface 404a-c, a radially inner surface 406a-c, and an aft end 408a-c where the radially outer surface 404a-c meets the radially inner surface 406a-c, defining a semi-circular or semi-elliptical shape at a tip 414a-c. Such a shape for the radially outer surface 404a-c, the radially inner surface 406a-c, and the aft end 408a-c defines the bullet shape for the fuel bodies 402a-c. Each outer fuel passage 400a-c exhausts to an outer mixing region 410a-c at a fuel outlet 412a-c.

Referring to FIG. 7A, the fuel outlet 412a exhausts along the radially outer surface 404a at the aft end 408a, such that the supply of fuel (F) is emitted in a radially outward direction, relative to a fuel injector carrying the fuel body 402a.

Referring to FIG. 7B, the fuel outlet 412b exhausts along the radially inner surface 406b at the aft end 408b, such that the supply of fuel (F) is emitted in a radially inward direction. The outer fuel passage 400b can include an outlet portion 420b that can be angled relative to the remainder of the outer fuel passage 400b and extending to the fuel outlet 412b. The outlet portion 420b can be arranged perpendicular to the surface of the aft end 408b at the fuel outlet 412b.

Referring to FIG. 7C, the fuel outlets 412c are arranged along both the radially outer surface 404c and the radially inner surface 406c at the aft end 408b, such that the supply of fuel (F) is emitted in both a radially inward direction and a radially outward direction. The outer fuel passage 400c branches into a first portion 430c and a second portion 432c that can be each angled relative to the remainder of the outer fuel passage 400c. The first portion 430c and the second portion 432c can be arranged perpendicular to the surface of the aft end 408c at the fuel outlet 412c, while a non-perpendicular arrangement is contemplated, like that of FIG. 7A.

Considering FIGS. 6A-7C, it should be appreciated that the outer fuel passages described herein can be angled, oriented, or arranged to emit a fuel as a cross-flow, co-rotation, or counter rotating flow with the supply of air, such as that shown in FIGS. 6A-6D. Additionally, the outer fuel passages can be angled oriented, or arranged to emit a fuel in a radially inward direction, a radially outward direction, or both, such as that shown in FIGS. 7A-7C, which may or may not be utilized in combination with the orientations of FIGS. 6A-6D. The bullet shape for the fuel bodies 402a-c of FIGS. 7A-7C reduces flow separation with the curved shape for the fuel body, which can improve intermixing within the downstream mixing region.

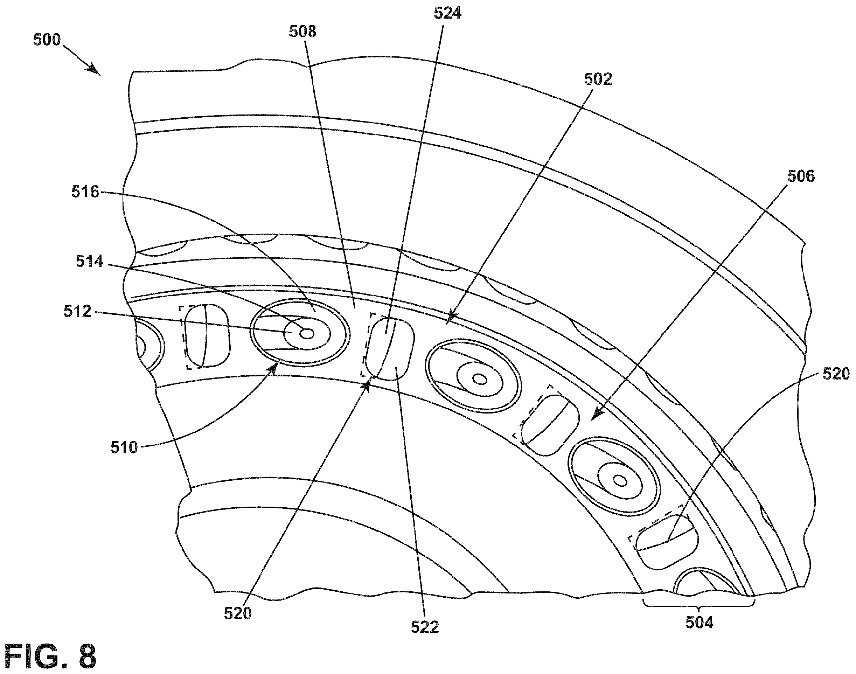

Referring to FIG. 8, a partial view of a fuel injector 500 is shown looking in a forward direction (relative to an engine centerline, like the engine centerline 20 of FIG. 1) toward an outer nozzle 502 through an outer nozzle outlet 504 and into an outer mixing region 506 in an annular arrangement. Such a view would be looking at the fuel injector 500 from within a combustion chamber (e.g., the combustion chamber 46 of FIG. 3) downstream of the fuel injector 500.

A fuel body 508 is provided in an annular arrangement forward of the outer mixing region 506 with a set of fuel passages 510 in an annular arrangement about the fuel body 508. Each fuel passage of the set of fuel passages 510 can include a centerbody 512 with a centerbody fuel passage 514 and an exterior fuel channel 516 arranged about the centerbody 512. The set of fuel passages 510 can have a tangential arrangement, as shown, such that a volume of fuel provided from the set of fuel passages 510 is emitted in a direction that is offset from parallel to a fuel injector axis (not shown), like the fuel injector axis 114, 214 of FIGS. 4-5, in non-limiting examples. In this way, a supply of fuel provided from the set of fuel passages 510 can be oriented or vectored in a tangential direction or at an angle that is in the same direction as air swirling within the outer mixing region 506. Such air can be provided from an inner air passage and an outer air passage, such as the inner air passages 150, 220 and outer air passages 152, 222 of FIGS. 4-5 in non-limiting examples. In an additional non-limiting example, it is contemplated that the orientation of the set of fuel passages 510 can be oriented to emit a flow of fuel that is counter rotating to the air swirling within the outer mixing region 506. In a non-limiting example, the set of fuel passages 510 can curve in order to emit fuel that is aligned with the air swirling within the outer mixing region 506, which can reduce flow disruption generated by the fuel being injected.

An air assist circuit 520 can be provided in the fuel body 508 as a set of air assist passages 522. Each air assist passage of the set of air assist passages 522 can be positioned between adjacent fuel passages of the set of fuel passages 510. An air assist vane 524 can be located within each air assist passage of the set of air assist passages 522. In a non-limiting example, the set of air assist passages 522 or the air assist circuit 520 can have slots at the exits, with such slots being aligned with the radial direction. Such slots permit direct interaction with the main fuel and air provided within the outer mixing region 506. The air assist vane 524 can impart a swirl or tangential component to air provided from the set of air assist passages 522. The tangential direction can be the same direction as that of the set of fuel passages 510, in a non-limiting example, while counter-rotating injection of air from the air assist circuit 520 is contemplated. The air provided to the outer mixing region 506 from inner and outer air passages (such as the inner air passages 150, 220 and outer air passages 152, 222 of FIGS. 4-5) and the air assist supply of air can be provided from the same source, such as air provided from the compression section 12 (FIG. 1) to the combustion section 14 (FIG. 1).

A tangential arrangement for the set of fuel passages 510 reduces or mitigates coking and facilitates purging at the set of fuel passages 510. The air assist circuit 520 assists in directing the circumferential or swirling movement of the mixture of fuel and air within the outer mixing region 506, such as assisting directing the supply of fuel and the supply of air passing within the outer mixing region 506 in a tangential direction, which can further facilitate intermixing of fuel and air within the outer mixing region 506, as well as mitigate coking. Furthermore, the air assist circuit 520 provide for air scooping or moving air from the mainstream airflow to the air assist passages 522, which helps in the fuel air-blast, which mitigates coking. The air-blast causes low localized pressures at the fuel injector exit, which improves purging to mitigate coking, as well as facilitating intermixing of the fuel and air.

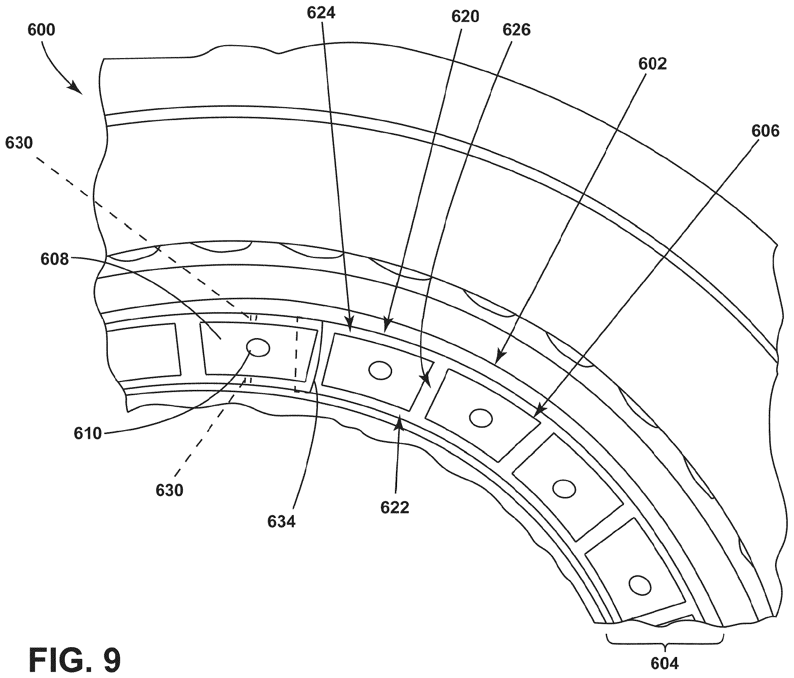

Referring to FIG. 9, a partial view of a fuel injector 600, which can be utilized in the fuel nozzle assemblies 32 of FIG. 2, for example, is shown looking in a forward direction toward an outer nozzle 602 through an outer nozzle outlet 604 at an outer mixing region 606 in an annular arrangement, showing a similar visual perspective as that of FIG. 8. A fuel body 608 is provided in an annular arrangement forward of the outer mixing region 606 with a set of fuel passages 610 in an annular arrangement about the fuel body 608.

An air assist circuit 620 is provided in the fuel body 608. The air assist circuit 620 includes an inner air assist passage 622 and an outer air assist passage 624, each in an annular arrangement about the fuel body 608 and with the inner air assist passage 622 positioned interior of the outer air assist passage 624. A set of radial air assist passages 626 extend between and fluidly couple the inner air assist passage 622 to the outer air assist passage 624. The set of radial air assist passages 626 can include one radial air assist passage positioned between each two adjacent fuel passages 610 of the set of fuel passages 610.

A set of ribs 630 (shown in broken lines) can extend across the inner and outer air assist passages 622, 624 to support the fuel body 608 carrying the set of fuel passages 610 between the inner and outer air assist passages 622, 624. A set of vanes 634 can be positioned within the air assist circuit 620 and can be positioned in or among one or more of the inner air assist passage 622, the outer air assist passage 624, or the set of radial air assist passages 626. The set of vanes 634 can impart a swirl or tangential component to air passing through the air assist circuit 620. In a non-limiting example, the set of ribs 630 can be formed as vanes to swirl a flow of air within the air assist circuit 620.

The air assist circuit 620 assists in directing the circumferential or swirling movement of the mixture of fuel and air within the outer mixing region 606, such as assisting directing the supply of fuel and the supply of air passing within the outer mixing region 606 in a tangential direction, which can further facilitate intermixing of fuel and air within the outer mixing region 606.

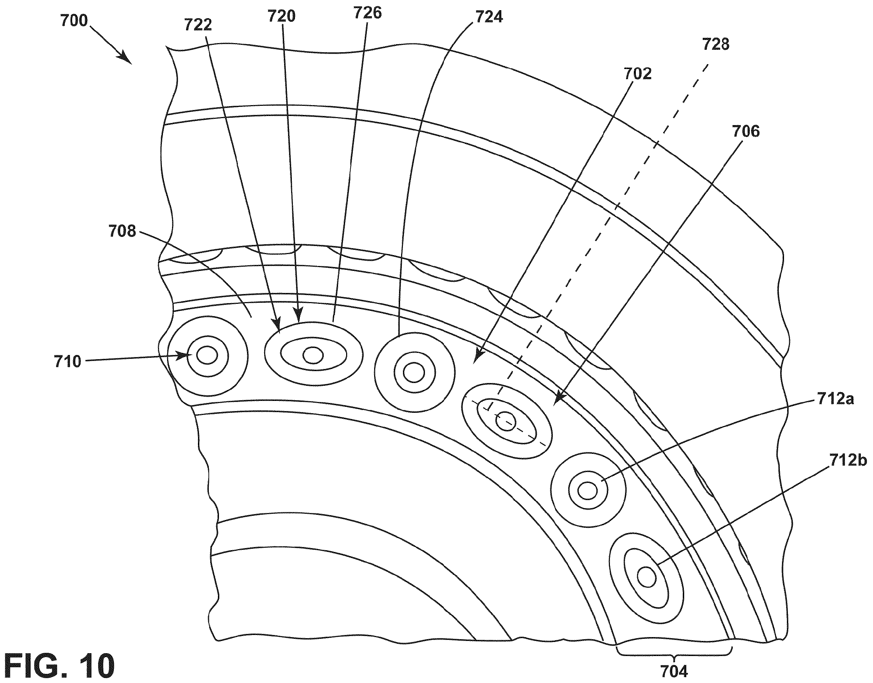

Referring to FIG. 10, a partial view of a fuel injector 700, which can be utilized in the fuel nozzle assemblies 32 of FIG. 2, for example, is shown looking in a forward direction toward an outer nozzle 702 through an outer nozzle outlet 704 at an outer mixing region 706 showing a similar visual perspective as that of FIGS. 8 and 9. A fuel body 708 is provided in an annular arrangement forward of the outer mixing region 706 with a set of fuel passages 710 in an annular arrangement about the fuel body 708.

An air assist circuit 720 is provided within the fuel body 708. The air assist circuit 720 can be formed as a set of air assist passages 722, with each air assist passage of the set of air assist passages 722 surrounding a fuel passage of the set of fuel passages 710. The set of air assist passages 722 can include one or more circular air assist passages 724 or one or more elliptical air assist passages 726, or both. The circular air assist passages 724 can be provided about circular center bodies 712a of the set of fuel passages 710, and the elliptical air assist passages 726 can be provided about elliptical center bodies 712b of the set of fuel passages 710. The circular air assist passages 724 and the elliptical air assist passages 726 can have an alternating arrangement about the set of fuel passages 710. The circular air assist passages 724 have a circular cross-section, such that the spacing between the fuel passage 710 within the circular air assist passage 724 is spaced equidistant from the fuel body 708 on all sides. The elliptical air assist passage 726 can have an elliptical cross-sectional shape. The elliptical cross-sectional shape can define a major axis 728 that can be arranged perpendicular to a radius extending from the engine centerline 20 (FIG. 1) or the combustor centerline 30 (FIG. 2) in non-limiting examples. As shown, the circular air assist passages 724 and the elliptical air assist passages 726 are arranged in an alternating matter, while other arrangements are contemplated. Additional cross-sectional shapes for the set of air assist passages 722 includes, but is not limited to, circular, oval, elliptical, racetrack, squared, rectangular, curved, linear, or combinations thereof. Additionally, various arrangements of the set of air assist passages 722 with different shapes or patterns thereof are contemplated. It is further contemplated that some fuel passages of the set of fuel passages 710 do not include a respective air assist passage of the set of air assist passages 722.

While the shapes for the circular and elliptical air assist passages 724, 726 are shown as circular and elliptical, additional shapes are contemplated, including but not limited to, squared, rounded, linear, curved, curvilinear, annular, tear drop, racetrack, or combinations thereof. Additionally, such shapes can define variable cross-sectional distances between the air assist passages and the internal fuel passages, or a complementary shape can achieve a consistent cross-sectional distance.

Different shapes can provide different benefits. For example, the elliptical and rounded shapes can create pressure differences within the mixing region downstream of the fuel body 708 which improves purging at the fuel passage to reduce coking and mitigate autoignition.

Benefits associated with the aspects herein include a reduction or mitigation of autoignition within the fuel injector, as well as a reduction of flame holding or flashback. The design of the fuel injector permits operation of a turbine engine with reduced emissions, including a reduction in NOₓ emissions and elimination of N-VPM emissions due to the lean burn nature of the fuel injector. The aspects described herein reduce or mitigate autoignition, flame holding, and flashback for the fuel injector, permitting reduced emissions without detrimental impact to the fuel injector resultant of such autoignition, flame holding, and flashback.

Additionally, the architecture described herein permits the use of relatively smaller combustor and fuel nozzle assembly constructions while mitigating autoignition, flame holding, and flashback in order to appreciate the reduction in NOₓ emissions and elimination of N-VPM emissions due to the lean burn nature of the fuel injector. Such a relatively smaller combustor or fuel nozzle assembly can reduce emissions, while also reducing engine weight and size.

Furthermore, the fuel injector as described herein provides improved atomization of fuel within the outer nozzle, which can further reduce emissions and mitigate the opportunity for autoignition, flame holding, and flashback.

The ramped geometry of the inner air passage (like the inner air passage 150, 220, of FIGS. 4-5) provides a radial velocity vector to the supply of air therein, which urges the fuel and air mixture outward at the outlet, which mitigates autoignition, flame holding, and flashback by maintaining the flame radially exterior of the inner nozzle within the combustion chamber.

The air assist circuits (520, 620, 720) as described herein reduce coking of the fuel at the fuel passages, as well as help to purge the fuel circuit. Purging the fuel circuit assists in the intermixing of the fuel and air to mitigate autoignition.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

It will be appreciated that the fuel injectors, and aspects thereof, as discussed herein are provided by way of example only and that in other exemplary embodiments, the fuel injectors may have any other suitable configurations. The aspects and features provided herein need not be limited to the embodiments as shown, and it is further contemplated that features and aspects from one or more embodiments can be added, removed, or interchanged with one or more other embodiment to define additional embodiments herein.

It should be appreciated that the different injectors and their features as described among FIGS. 4-10 can all be utilized within a common engine, such as the turbine engine 10 of FIG. 1, or within a common component, such as the combustor 34 of FIGS. 2-3, and it should be understood that the injectors and their features are not mutually exclusive.

Further aspects are provided by the subject matter of the following clauses:
A fuel injector for a gas turbine engine comprising a compression section, combustion section, and turbine section in a serial flow arrangement, the fuel injector comprising: an inner nozzle defining a fuel injector axis; an outer nozzle in annular arrangement about the inner nozzle and exhausting at an outer nozzle outlet, the outer nozzle comprising: a mixing region forward of the outer nozzle outlet; an inner air passage exhausting to the mixing region; an outer air passage in annular arrangement about the inner air passage and exhausting to the mixing region; a fuel body positioned between and partially defining the inner air passage and the outer air passage, the fuel body including an exterior fuel body surface partially defining the outer air passage and an interior fuel body surface partially defining the inner air passage, the fuel body terminating at an aft end at the mixing region; and a set of fuel passages in annular arrangement within the fuel body exhausting to the mixing region through the aft end of the fuel body.

The fuel injector of any preceding clause, further comprising a body positioned between the inner nozzle and the outer nozzle, with the body including an exterior surface partially defining the inner air passage.

The fuel injector of any preceding clause, wherein the exterior surface is defined by a ramp extending toward the mixing region, and wherein the ramp is angled by a first angle relative to an axis arranged parallel to the fuel injector axis, and wherein the first angle is greater than or equal to two degrees (2°) and less than or equal to fifty degrees (50°).

The fuel injector of any preceding clause, further comprising a swirler in annular arrangement about the body and including an inner surface at least partially defining the mixing region and the outer air passage.

The fuel injector of any preceding clause, wherein the inner surface is arranged parallel to the fuel injector axis.

The fuel injector of any preceding clause, wherein the inner surface is arranged parallel to the exterior surface of the fuel body.

The fuel injector of any preceding clause, wherein the inner surface is arranged at a second angle relative to an axis arranged parallel to the fuel injector axis, and wherein the second angle is greater than or equal to two degrees (2°) and less than or equal to forty-five degrees (45°).

The fuel injector of any preceding clause, wherein the mixing region is further defined between the exterior surface of the body and the inner surface along the swirler; wherein a mixing region height is defined as a radial distance between the inner surface and the exterior surface at the aft end and wherein the mixing region height is defined perpendicular to the fuel injector axis; and wherein the fuel outlet is positioned between 25% and 75% of the mixing region height, where 0% represents a position at the inner surface and 100% represents a position at the exterior surface.

The fuel injector of any preceding clause, wherein the swirler further comprises a set of swirler vanes each extending to a vane aft end; wherein a passage length is defined as an axial length between the vane aft end and the outer nozzle outlet defined parallel to the fuel injector axis; and wherein the aft end of the fuel body is positioned between 10%-80% of the passage length, where 0% represents a position at the vane aft end and 100% represents a position at the outer nozzle outlet.

The fuel injector of any preceding clause, wherein the mixing region is further defined between an interior surface and an exterior surface, and wherein at least one of the interior surface or the exterior surface is angled relative to a second axis parallel to the fuel injector axis.

The fuel injector of any preceding clause, wherein the interior surface is angled relative to a second axis arranged parallel to the fuel injector axis.

The fuel injector of any preceding clause, wherein the interior surface is curved, and wherein the first angle is measured at a position aligned with an aft end of the fuel body relative to the fuel injector axis.

The fuel injector of any preceding clause, wherein the fuel body further comprises one of a protuberance extending from the fuel body or a varying axial extent for an aft end of the fuel body, with the one of the protuberance or varying axial extent defining a first face and a second face along the fuel body.

The fuel injector of any preceding clause, wherein the fuel body further comprises one of a protuberance extending from the aft end of the fuel body or a varying axial extent for the aft end of the fuel body, with the one of the protuberance or the varying axial extent defining a first face and a second face along the aft end of the fuel body.

The fuel injector of any preceding clause, wherein the set of fuel passages each comprise a fuel outlet arranged on at least one of the first face or the second face.

The fuel injector of any preceding clause, wherein the fuel body further comprises a radially inner surface and a radially outer surface meeting the radially inner surface at an aft end, and wherein the set of fuel passages exhaust to the mixing region at one of the radially inner surface or the radially outer surface.

The fuel injector of any preceding clause, wherein the radially inner surface and the radially outer surface curve at the aft end to define a bullet shape for the fuel body.

The fuel injector of any preceding clause, wherein the aft end is shaped as a bullet shape for the fuel body.

The fuel injector of any preceding clause, further comprising an air assist circuit provided within the fuel body.

The fuel injector of any preceding clause, wherein the air assist circuit includes a set of air assist passages in annular arrangement within the fuel body.

The fuel injector of any preceding clause, wherein the set of air assist passages and the set of fuel passages are arranged in alternating arrangement about the fuel body.

The fuel injector of any preceding clause, wherein the set of air assist passages are arranged around the set of fuel passages.

The fuel injector of any preceding clause, wherein the set of air assist passages are arranged as circular air assist passages and elliptical air assist passages in alternating arrangement among the set of fuel passages.

The fuel injector of any preceding clause, wherein the air assist circuit includes an inner air assist passage and an outer air assist passage in annular arrangement about the inner air assist passage.

The fuel injector of any preceding clause, further comprising a set of radial air assist passages extending between the inner air assist passage and the outer air assist passage.

The fuel injector of any preceding clause, further comprising a set of vanes provided within the air assist circuit.

A fuel injector comprising: a body defining a fuel injector axis; a nozzle provided within the body and defining a mixing region in annular arrangement about the fuel injector axis; an inner air passage exhausting to the mixing region; an outer air passage exhausting to the mixing region and positioned exterior of the inner air passage relative to the fuel injector axis; and a fuel body positioned between and partially defining the inner air passage and the outer air passage, the fuel body including a fuel passage exhausting to the mixing region.

The fuel injector of any preceding clause, wherein an exterior surface of the body defining the inner air passage is further defined by a ramp extending toward the mixing region, and wherein the ramp is angled by a first angle relative to an axis arranged parallel to the fuel injector axis, and wherein the first angle is greater than or equal to two degrees (2°) and less than or equal to fifty degrees (50°).

The fuel injector of any preceding clause, further comprising a swirler in annular arrangement about the body and including an inner surface at least partially defining the mixing region and the outer air passage.

The fuel injector of any preceding clause, wherein the inner surface is arranged parallel to the fuel injector axis.

The fuel injector of any preceding clause, wherein the inner surface is arranged parallel to the exterior surface of the fuel body.

The fuel injector of any preceding clause, wherein the inner surface is arranged at a second angle relative to an axis arranged parallel to the fuel injector axis, and wherein the second angle is greater than or equal to two degrees (2°) and less than or equal to forty-five degrees (45°).

The fuel injector of any preceding clause, wherein the mixing region is further defined between the exterior surface of the body and the inner surface along the swirler; wherein a mixing region height is defined as a radial distance between the inner surface and the exterior surface at the aft end and wherein the mixing region height is defined perpendicular to the fuel injector axis; and wherein the fuel outlet is positioned between 25% and 75% of the mixing region height, where 0% represents a position at the inner surface and 100% represents a position at the exterior surface.

The fuel injector of any preceding clause, wherein the swirler further comprises a set of swirler vanes each extending to a vane aft end; wherein a passage length is defined as an axial length between the vane aft end and the outer nozzle outlet defined parallel to the fuel injector axis; and wherein the aft end of the fuel body is positioned between 10%-80% of the passage length, where 0% represents a position at the vane aft end and 100% represents a position at the outer nozzle outlet.

The fuel injector of any preceding clause, wherein the mixing region is further defined between an interior surface and an exterior surface, and wherein at least one of the interior surface or the exterior surface is angled relative to a second axis parallel to the fuel injector axis.

The fuel injector of any preceding clause, wherein the interior surface is curved, and wherein the first angle is measured at a position aligned with an aft end of the fuel body relative to the fuel injector axis.

The fuel injector of any preceding clause, wherein the fuel body further comprises one of a protuberance extending from the fuel body or a varying axial extent for an aft end of the fuel body, with the one of the protuberance or varying axial extent defining a first face and a second face along the fuel body.

The fuel injector of any preceding clause, wherein the set of fuel passages each comprise a fuel outlet arranged on at least one of the first face or the second face.

The fuel injector of any preceding clause, wherein the fuel body further comprises a radially inner surface and a radially outer surface meeting the radially inner surface at an aft end, and wherein the set of fuel passages exhaust to the mixing region at one of the radially inner surface or the radially outer surface.

The fuel injector of any preceding clause, wherein the radially inner surface and the radially outer surface curve at the aft end to define a bullet shape for the fuel body.

The fuel injector of any preceding clause, further comprising an air assist circuit provided within the fuel body.

The fuel injector of any preceding clause, wherein the air assist circuit includes a set of air assist passages in annular arrangement within the fuel body.

The fuel injector of any preceding clause, wherein the set of air assist passages and the set of fuel passages are arranged in alternating arrangement about the fuel body.

The fuel injector of any preceding clause, wherein the set of air assist passages are arranged around the set of fuel passages.

The fuel injector of any preceding clause, wherein the set of air assist passages are arranged as circular air assist passages and elliptical air assist passages in alternating arrangement among the set of fuel passages.

The fuel injector of any preceding clause, wherein the air assist circuit includes an inner air assist passage and an outer air assist passage in annular arrangement about the inner air assist passage.

The fuel injector of any preceding clause, further comprising a set of radial air assist passages extending between the inner air assist passage and the outer air assist passage.

The fuel injector of any preceding clause, further comprising a set of vanes provided within the air assist circuit.

## Claims

1. A fuel injector (100) for a gas turbine engine (10) comprising a compression section (12), a combustion section (14), and a turbine section (16) in a serial flow arrangement, the fuel injector (100) comprising:
an inner nozzle (104) defining a fuel injector axis (114);
an outer nozzle (106) in annular arrangement about the inner nozzle (104) and exhausting at an outer nozzle outlet (110), the outer nozzle (106) comprising:
a mixing region (156) forward of the outer nozzle outlet (110);
an inner air passage (150) exhausting to the mixing region (156);
an outer air passage (152) in annular arrangement about the inner air passage (150) and exhausting to the mixing region (156); and
a fuel body (180) positioned between and partially defining the inner air passage (150) and the outer air passage (152), the fuel body (180) including an outer surface (194) partially defining the outer air passage (152) and an inner surface (192) partially defining the inner air passage (150), the fuel body (180) terminating at an aft end (196) at the mixing region (156); and
a set of fuel passages (154) in annular arrangement within the fuel body (180) exhausting to the mixing region (156) through the aft end (196) of the fuel body (180).

2. The fuel injector (100) of claim 1, further comprising a body (102) positioned between the inner nozzle (104) and the outer nozzle (106), with the body (102) including an exterior surface (168) partially defining the inner air passage (150).

3. The fuel injector (100) of claim 2, wherein the exterior surface (168) is defined by a ramp (166) extending toward the mixing region (156), and wherein the ramp (166) is angled by a first angle (*β*) relative to a first axis (254) arranged parallel to the fuel injector axis (114), and wherein the first angle (*β*) is greater than or equal to two degrees (2°) and less than or equal to fifty degrees (50°).

4. The fuel injector (100) of claim 3, further comprising a swirler (170) in annular arrangement about the body (102) and including an interior surface (174) at least partially defining the mixing region (156) and the outer air passage (152).

5. The fuel injector (100) of claim 4, wherein the interior surface (174) is arranged parallel to the fuel injector axis (114).

6. The fuel injector (100) of claim 4, wherein the interior surface (174) is arranged parallel to the outer surface (194) of the fuel body (180).

7. The fuel injector (100) of claim 4, wherein the interior surface (174) is arranged at a second angle (*α*) relative to a second axis (256) arranged parallel to the fuel injector axis (114), and wherein the second angle (*α*) is greater than or equal to two degrees (2°) and less than or equal to forty-five degrees (45°).

8. The fuel injector (100) of claim 4, wherein the mixing region (156) is further defined between the exterior surface (168) of the body (102) and the interior surface (174) of the swirler (170);
wherein a mixing region height (H) is defined as a radial distance between the interior surface (174) and the exterior surface (168) at the aft end (196) and wherein the mixing region height (H) is defined perpendicular to the fuel injector axis (114); and
wherein a fuel outlet (190) for the set of fuel passages (154) is positioned between 25% and 75% of the mixing region height (H), where 0% represents a position at the interior surface (174) and 100% represents a position at the exterior surface (168).

9. The fuel injector (100) of claim 8, wherein the swirler (170) further comprises a set of swirler vanes (172) each terminating at a vane aft end (242);
wherein a passage length (L) is defined as an axial length between the vane aft end (242) and the outer nozzle outlet (110) defined parallel to the fuel injector axis (114); and
wherein the aft end (196) of the fuel body (180) is positioned between 10%-80% of the passage length (L), where 0% represents a position at the vane aft end (242) and 100% represents a position at the outer nozzle outlet (110).

10. The fuel injector (100) of claim 3, wherein the interior surface (174) is angled relative to a second axis (256) arranged parallel to the fuel injector axis (114).

11. The fuel injector (100) of any preceding claim, wherein the fuel body (180) further comprises one of a protuberance (308a-c) extending from the aft end (196) of the fuel body (180) or a varying axial extent for the aft end (196) of the fuel body (180), with the one of the protuberance (308a-c) or varying axial extent defining a first face (310a-b, 340d) and a second face (312a-b, 342d) along the aft end (196) of the fuel body (180).

12. The fuel injector (100) of claim 11, wherein the set of fuel passages (154) each comprise a fuel outlet (190) arranged on at least one of the first face (310a-b, 340d) or the second face (312a-b, 342d).

13. The fuel injector (100) of any preceding claim, wherein the aft end (196) is shaped as a bullet shape for the fuel body (180).

14. The fuel injector (100) of any preceding claim, further comprising an air assist circuit (520, 620, 720) provided within the fuel body (180).

15. The fuel injector (100) of claim 14, wherein the air assist circuit (520, 620, 720) includes a set of air assist passages (522, 622, 624, 626, 722) in annular arrangement within the fuel body (180).
